# EUROPÄISCHE PATENTSCHRIFT

(11) **EP 0 510 005 B1**
(45) Veröffentlichungstag und Bekanntmachung des Hinweises auf die Patenterteilung: **31.08.1994**
(21) Anmeldenummer: 91900154.5
(22) Anmeldetag: 22.12.1990
(51) Int. Cl.: B23B 51/10

(54) **WERKZEUG ZUR BEARBEITUNG VON BOHRUNGEN**
BORE-FINISHING TOOL
OUTIL POUR L'USINAGE D'ALESAGES

(30) Priorität: 09.01.1990 DE 4000402
(43) Veröffentlichungstag der Anmeldung: 28.10.1992
(73) Patentinhaber: ROBERT BOSCH GMBH, 70442 Stuttgart (DE)
(72) Erfinder: SCHMIDT, Hermann, D-7410 Reutlingen 24 (DE); AULICH, Dieter, D-7413 Gomaringen (DE); ESSIG, Peter, D-7410 Reutlingen 1 (DE)
(86) Internationale Anmeldenummer: DE9000987
(87) Internationale Veröffentlichungsnummer: WO9110527

(56) Entgegenhaltungen:
- DE-A- 3 517 147
- GB-A- 0 991 611
- US-A- 2 450 075
- US-A- 2 732 612
- US-A- 3 076 254

## Beschreibung

Die Erfindung geht von einem Werkzeug nach der Gattung des Patentanspruchs 1 aus. Bei einem solchen durch die GB-A 991 611 bekannten Werkzeug weist dieses einen massiven Schaft auf, in den in eine axiale Sackbohrung ein Bündel von Drähten eingeschoben sind, die an ihrem anderen Ende kopfartig etwa teilkreisförmig gebogen sind und quer zur Längsachse des Schaftes federnd zusammendrückbar sind. Der Schaft dieses Werkzeuges wird entweder von Hand oder durch ein Elektrowerkzeug wie z.B. einer Bohrmaschine geführt und rotierend bewegt. Zusätzlich kann das Werkzeug auch noch in Längsrichtung hin und her verschoben werden. Die federnden Arme sind dabei starr mit dem Schaft verbunden, der seinerseits mit dem Antrieb fest gekoppelt ist. Somit kann es bei Auftreffen des Werkzeuges auf Widerstände zu einer Zerstörung des Werkzeuges kommen.

Durch die erfindungsgemäße Ausgestaltung gemäß Patentanspruch 1 ergibt sich eine vorteilhafte Lagerung des Werkzeuges in einem Halter. Durch die Führungsteile wird das Werkzeug in Form des haarnadelförmig gebogenen Federdrahtes genau geführt und es kann bei Auftreffen auf Widerständen, was z. B. beim Einführen des Werkzeuges in eine Querbohrung auftreten kann, achsial in Richtung der Feder ausweichen, ohne daß es zu einer Zerstörung des Werkzeugs kommt. Damit wird das Werkzeug geeignet für die Verwendung bei Bearbeitungsautomaten. Dort kann es vorkommen, daß ein Werkzeug zum Entgraten dann nicht in Position gebracht werden kann, wenn aufgrund eines Fehlers die entsprechende Bohrung am Werkstück fehlt oder aufgrund von z. B. eines abgebrochenen Bohrers die zu bearbeitende Bohrung verschlossen ist. In solchen Fällen weicht das Werkzeug gemäß der Erfindung beim Auftreffen auf das "Hindernis" in den Schaft des Halters aus. Durch die Ausführung gemäß Anspruch 3 ist eine leichte Auswechselbarkeit des Werkzeugs erreicht, da der haarnadelförmig gebogene Federdraht an den ausweichenden Kugeln vorbei in Position einschnappbar ist.

### Zeichnung

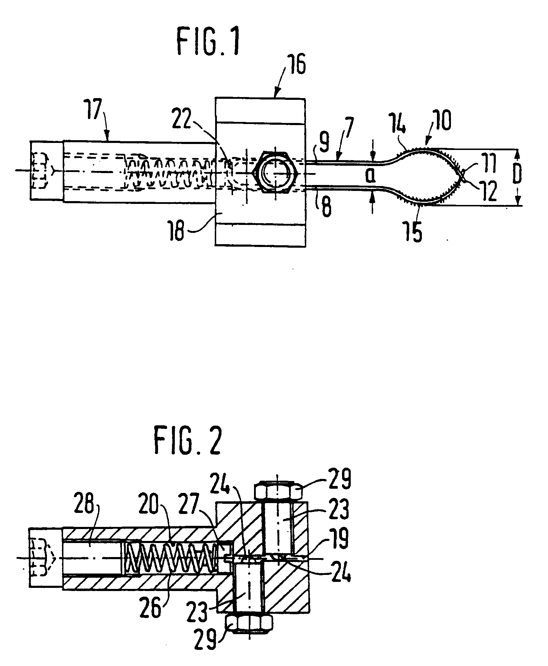

Ein Ausführungsbeispiel der Erfindung ist in der Zeichnung dargestellt und wird im folgenden näher beschrieben. Es zeigen Figur 1 das Ausführungsbeispiel des erfindungsgemäßen Werkzeugs in der Seitenansicht und Figur 2 einen Schnitt senkrecht zur Bildebene von Figur 1 durch den Halter des Werkzeugs.

### Beschreibung

Das im Längsschnitt in Figur 1 gezeigte Werkzeug zur Bearbeitung von Übergangskanten von Bohrungen zur Beseitigung von dort bei Bearbeitungsvorgängen entstandenen Graten weist einen Schaft aus einem haarnadelförmig gebogenen Federdraht 7 mit zwei federnden, in Ruhestellung etwa parallel zueinander verlaufenden Armen 8 und 9, auf, deren freie Enden unter Bildung eines kopfartigen Schneidteils 10 jeweils zu einer etwa teilkreisförmigen Auswölbung 14, 15 gebogen sind. Die äußersten Enden 11, 12 der Arme überlappen sich dabei, so daß bei einem Druck quer zur Ebene, in der die Arme 8, 9 liegen, die äußersten Enden aneinander vorbei gleiten können und der größte Durchmesser D des Schneidteils 10 variabel verändert werden kann. Der größte Durchmesser D des Schneidteils ist wenigstens doppelt so groß wie der Abstand a der Arme 8, 9 voneinander. Im Bereich der teilkreisförmigen Auswölbung 14, 15 sind die Arme mit Schneidmittel beschichtet, das aus in Trägermaterial eingebetteten Diamantkörnern bestehen kann, wie es in der Regel bei Honleisten von Honwerkzeugen zum Einsatz kommt. Es sind aber auch andere Schneidmittel denkbar.

Die Arme 8, 9 des Federdrahts 7 bilden quasi einen Schaft, der in einem Halter 16 gehalten wird, der wiederum einen Aufnahmeschaft 17 aufweist, über welchem der Halter mit einem entsprechenden Antriebselement verbunden, das hier nicht weiter gezeigt ist und z. B. eine Bohrspindel sein kann. Das Antriebselement bringt das Schneidwerkzeug mit dem kopfartigen Schneidteil in die gewünschte Position und treibt zudem das Werkzeug rotierend an zur Durchführung der Arbeitsbewegung. Anschließend an dem Aufnahmeschaft 17 weist der Halter einen Kopf 18 auf, der einen achsialen Schlitz 19 (s. Figur 2) besitzt. Dieser Schlitz geht über in eine Bohrung 20 im Aufnahmeschaft 17. In den Schlitz 19 ist das gebogene Ende 22 des haarnadelförmig gebogenen Federdrahts 7 eingeschoben und wird dort durch zwei jeweils von der gegenüberliegenden Seite her in den Kopf eingeschraubte Führungsteile in Form von Schraubbolzen 23 fixiert. Die Schraubbolzen weisen auf ihren in den Schlitz 19 ragenden Enden jeweils eine zum Innern der Schraubbolzen abgefederte Kugel 24 auf, die zwischen die Arme 8 und 9 des haarnadelfömig gebogenen Federdrahtes eingreifen und diesen in Längsrichtung und achsial zum Aufnahmeschaft führen.

Das gebogene Ende 22 des Federdrahtes 7 wird von einer Druckfeder 26 beaufschlagt, die in der Bohrung 20 angeordnet ist und über ein Druckstück 27 an der Feder anliegt. Gegenüberliegend stützt sich die Druckfeder an einer Schraube 28 ab, die z. B. auch variabel und in ihrer Einschraubtiefe gesichert in den Aufnahmeschaft stirnseitig einschraubbar ist und somit die Vorspannung der Druckfeder sicherstellt. Die Schraubbolzen sind durch Kontermuttern 29 in ihrer Einschraubstellung gesichert und ragen in Achsrichtung gesehen hintereinander liegend von gegenüberliegenden Seiten her mit den Kugeln 24 in den Schlitz 19 hinein.

Bei dieser Ausgestaltung kann das Werkzeug in Form des haarnadelförmig gebogenen Federdrahtes stirnseitig in den Schlitz 19 des Halters 16 eingeführt werden. Dabei schnappt das gebogene Ende 22 nacheinander an den Kugeln 24 vorbei in die eingerastete Stellung und kommt dann in Anlage an das Druckstück 27. Im Arbeitseinsatz wird das Werkzeug über den Halter 16 in die zu bearbeitende Bohrung eingeführt, dabei weichen die teilkreisförmigen Auswölbungen 14 zueinander nach innen federnd aus, bis sie wieder am Ende der Bohrung bzw. am Übergang der Bohrung zu dem größeren Bohrungsteil oder zur Längsbohrung, in die die Querbohrung mündet, sich federnd aufweiten und in Arbeitsstellung kommen und dabei mit einem Teil ihrer teilkreisförmigen Erstreckung in Anlage an die Übergangskante der Querbohrung kommen. Dann oder auch früher kann das Werkzeug rotierend angetrieben werden und trägt dabei ein evtl. an der Kante vorhandenen Grat mit dem beschichteten Teil des Federdrahtes ab.

Sollte das Werkzeug auf einen Widerstand stoßen, so kann es in das Innere des Halters entgegen der Kraft der Druckfeder ausweichen und wird somit vor Zerstörung bewahrt. Die hohe Flexibilität des Federdrahtes erlaubt es, Bohrungen mit sehr unterschiedlichem Durchmesser zu bearbeiten. Z. B. sind schon mit zwei Werkzeugausführungen Bohrungen im Bereich von 2 bis 4 mm bearbeitbar. Das Werkzeug paßt sich optimal an ohne zu große Anpreßdrücke und liegt nur in einem Punkt bzw. kurzen Linienbereich an der zu bearbeitenden Kante an. Das Werkzeug ist ferner sehr kostengünstig herstellbar und kann leicht bei Erreichen der Standzeit als Verschleißteil ausgetauscht werden. Statt der etwas aufwendigen aber sehr vorteilhaften, in der Figur gezeigten Lagerung des Werkzeugs kann dieses natürlich auch in einem Halter fest eingespannt werden bei exakter Fluchtung zur Achse des Halters. Aber selbst leichte Fluchtungsfehler kann das Werkzeug aufgrund seiner hohen Flexibilität kompensieren. Dies ermöglicht auch die Bearbeitung von verschiedensten Arten von Übergängen von Bohrungen, wie z. B. auch Übergangskanten von Sackbohrungen und Stufenbohrungen.

## Patentansprüche

1. Werkzeug zur Bearbeitung von Bohrungsübergängen mit einem Schaft, der in ein Antriebselement einspannbar ist zur Durchführung eines Vorhubes des Werkzeugs durch die Bohrung in Arbeitsstellung, eines Rückhubes sowie einer wenigstens rotierenden Arbeitsbewegung des Werkzeuges und der ein Schneidteil (10) aufweist, der an wenigstens zwei zumindestens einen Teil des Schaftes bildenden federnden Armen (8, 9) angeordnet ist und aus kopfartig etwa teilkreisförmig gebogenen Enden (14) des Federdrahtes gebildet ist, welche Enden einander federnd überlappend bewegbar sind, dadurch gekennzeichnet, daß die federnden Arme (8, 9) durch einen haarnadelförmig gebogenen Federdraht (7) gebildet und mit Schneidmittel beschichtet sind und der haarnadelförmig gebogene Federdraht (7) auf seiner den gebogenen Enden abgewandten Seite mit seinem haarnadelförmig gebogenen Ende (22) in einen Schlitz (19) eines mit dem Antriebselement verbindbaren Halters (16) eingesetzt und dort durch zwei zwischen die Arme (8, 9) eingreifende Führungsteile (23, 24) geführt und axial nach außen durch eine Haltefeder (26) beaufschlagt ist, die sich im Halter abstützt.

2. Werkzeug nach Anspruch 1, dadurch gekennzeichnet, daß die Führungsteile Schraubbolzen (23) sind.

3. Werkzeug nach Anspruch 2, dadurch gekennzeichnet, daß die Schraubbolzen stirnseitig an ihren in den Schlitz (19) ragenden Enden federbelastete Kugeln (24) aufweisen, die ein Einführen des Federdrahtes (7) mit dem gebogenen Ende (22) in den Schlitz (19) ermöglichen.

4. Werkzeug nach einem der vorstehenden Ansprüche, dadurch gekennzeichnet, daß das Schneidteil (10) mit einem Schneidmittel bestehend aus in Trägermaterial eingebetteten Diamantkörnern beschichtet ist.

## Claims

1. Tool for machining bore transitions, which comprises a shank which can be clamped in a drive element in order to make a forward stroke of the tool through the bore in the working position, a return stroke and also an at least rotational working movement of the tool, and which comprises a cutting part (10) which is arranged on at least two resilient arms (8, 9) forming at least a part of the shank and which is formed by ends (14) of the spring wire which are bent like heads approximately into part of a circle and which are movable to overlap one another resiliently, characterized in that the resilient arms (8, 9) are formed by a spring wire (7) bent into a hairpin shape and are coated with cutting medium and the spring wire (7) bent into a hairpin shape is inserted by its end (22) bent into a hairpin shape, at its side remote from the bent ends, into a slot (19) in a holder (16), which can be connected to the drive element, and is there guided by two guide parts (23, 24) engaging between the arms (8, 9) and is loaded axially outwardly by a holding spring (26) which is supported in the holder.

2. Tool according to Claim 1, characterized in that the guide parts are threaded bolts (23).

3. Tool according to Claim 2, characterized in that on their end faces at their ends projecting into the slot (19) the threaded bolts have spring-loaded balls (24) which permit insertion of the spring wire (7) by its bent end (22) into the slot (19).

4. Tool according to one of the preceding claims, characterized in that the cutting part (10) is coated with a cutting medium consisting of diamond grains embedded in carrier material.

## Revendications

1. Outil pour l'usinage de transition d'alésages, au moyen d'une tige qui peut être enserrée par un entraîneur servant à pousser l'outil dans l'alésage pour l'amener en position de travail, à le faire reculer ainsi qu'à le faire travailler au moins en rotation et qui comporte une partie coupante (10) placée sur au moins deux bras élastiques (8, 9) constituant au moins une partie de la tige et formés par les extrémités (14) d'un fil élastique, recourbées sensiblement en arcs de cercle pour former une tête et mobiles en recouvrement élastique l'une par rapport à l'autre, caractérisé en ce que les bras élastiques (8, 9) sont ceux d'un fil élastique (7) recourbé en forme d'épingle à cheveux, ils sont recouverts de moyens de coupe tandis que le fil (7), par sa partie recourbée en épingle à cheveux située à l'opposé des extrémités en arcs de cercle, est engagé dans une fente (19) d'un support (16) qui peut être relié à l'entraîneur, avec guidage du fil dans cette fente par deux pièces (23, 24) intervenant entre les bras (8, 9) et poussée sur ce fil, exercée en direction axiale vers l'extérieur par un ressort de maintien (26) monté dans le support.

2. Outil selon la revendication 1, caractérisé en ce que les pièces de guidage du fil sont des vis filetées (23).

3. Outil selon la revendication 2, caractérisé en ce que les tiges filetées portent à leurs extrémités frontales situées dans la fente (19) des billes (24) chargées élastiquement, permettant d'introduire le fil élastique (7) par son extrémité repliée (22) dans la fente (19).

4. Outil selon l'une des revendications précédentes, caractérisé en ce que la partie coupante (10) est recouverte d'un moyen de coupe constitué de grains de diamant noyés dans un matériau support.
